# EUROPÄISCHE PATENTSCHRIFT

(11) **EP 0 929 794 B1**
(45) Veröffentlichungstag und Bekanntmachung des Hinweises auf die Patenterteilung: **27.11.2002**
(21) Anmeldenummer: 98925425.5
(22) Anmeldetag: 21.03.1998
(51) Int. Cl.: G01D 3/02, F02D 41/34, F02D 41/14

(54) **VERFAHREN UND VORRICHTUNG ZUR KORREKTUR VON TOLERANZEN EINES GEBERRADES**
METHOD AND DEVICE FOR CORRECTING MARGINS OF ERROR OF AN INDICATING WHEEL
PROCEDE ET DISPOSITIF POUR LA CORRECTION DE TOLERANCES D'UNE ROUE INDICATRICE

(30) Priorität: 06.08.1997 DE 19733958
(43) Veröffentlichungstag der Anmeldung: 21.07.1999
(73) Patentinhaber: ROBERT BOSCH GMBH, 70442 Stuttgart (DE)
(72) Erfinder: BIRK, Manfred, D-71739 Oberriexingen (DE); SAMUELSEN, Dirk, D-71679 Asperg (DE); RUPP, Peter, D-91686 Remseck (DE); FEHRMANN, Rüdiger, D-71229 Leonberg (DE)
(86) Internationale Anmeldenummer: DE9800839
(87) Internationale Veröffentlichungsnummer: WO99008071

(56) Entgegenhaltungen:
- EP-A- 0 306 906
- EP-A- 0 655 554
- WO-A-95/23974

## Beschreibung

### Stand der Technik

Die Erfindung betrifft ein Verfahren und eine Vorrichtung zur Adaption von Toleranzen eines Geberrades gemäß den Oberbegriffen der unabhängigen Ansprüche.

Ein Verfahren und eine Vorrichtung zur Adaption von Toleranzen eines Geberrades ist beispielsweise aus der DE 41 33 679 (US 5,428,991) bekannt. Dort wird ein Verfahren und eine Vorrichtung zur Adaption von mechanischen Toleranzen eines Geberrades beschrieben. Das Geberrad weist eine Anzahl von Markierungen auf, deren Abstände näherungsweise gleich sind. Diese Markierungen werden von einem Aufnehmer abgetastet, der eine Pulsfolge liefert, ausgehend von denen Meßwerte gebildet werden.

Aufgrund von Toleranzen bei der Fertigung und des Einbaus des Geberrades weisen die Abstände der Markierungen nicht immer den gleichen Abstand auf. Daher ist vorgesehen, daß diese Toleranzen gelernt und berücksichtigt werden. Hierzu werden die einzelnen Meßwerte mit einem Referenzwert verglichen. Als Referenzwert wird ein bestimmter Meßwert verwendet.

Ein weiteres Verfahren um Toleranzen eines Geberrades zu kompensieren ist aus der WO 95 239 74 bekannt. Hierzu ist vorgesehen, dass im Leerlauf oder bei bestimmten Drehzahlwerten die Abweichungen, die auf Toleranzen des Geberrads beruhen, gemessen und bei der anschließenden Steuerung berücksichtigt werden. Hierzu werden mittels Filter für unterschiedliche Drehzahlwerte unterschiedliche Korrekturwerte durch Mittelwertbildung über der Drehzahl bestimmt.

Mittels dieser Vorgehensweise können nur Toleranzen kompensiert werden, die in allen Betriebszuständen den gleichen Wert annehmen. Üblicherweise treten aber auch Toleranzen auf, die sich in unterschiedlichen Betriebszuständen unterschiedlich auswirken.

Die Fertigungstoleranzen des Geberrades wirken sich in allen Betriebszuständen nahezu gleich aus. Torsionsschwingungen der Welle, auf der das Geberrad angeordnet ist, sind aber vom Betriebszustand abhängig. Dies führt dazu, daß bei der Vorgehensweise gemäß dem Stand der Technik diese Toleranzen nicht ausreichend kompensiert werden können.

Desweiteren ist aus der DE 195 27 218 ein Verfahren und eine Vorrichtung zur Regelung der Laufruhe einer Brennkraftmaschine bekannt. Bei dieser Einrichtung werden ausgehend von den Meßwerten eines Segmentrades Korrekturwerte der einzuspritzenden Kraftstoffmenge bestimmt, um eine Zylindergleichstellung durchzuführen. Hierbei soll erreicht werden, daß allen Zylindern die gleiche Kraftstoffmenge zugemessen wird. Hierzu wird das Drehzahlsignal ausgewertet. Aus einer ungleichförmigen Drehzahl wird auf eine ungleichförmige Einspritzung zurückgeschlossen und diese entsprechend korrigiert.

Geberradtoleranzen führen dazu, daß obwohl die eingespritzte Kraftstoffmenge gleichförmig ist, die Drehzahl der einzelnen Segmente ungleich sind. Wird das obige Verfahren angewendet, so führt dies dazu, daß die Drehzahl wohl gleichförmig ist, die eingespritzte Kraftstoffmenge von Zylinder zu Zylinder aber unterschiedlich ist.

Ferner beschreibt die EP-A-0 655 554 ein Verfahren und eine Vorrichtung zur Korrektur und Schwingungen, die bei Übergangszuständen auftreten. Diese werden durch Änderungen des Motordrehmoments verursacht. Hierzu wird das Drehzahlsignal zweimal mittels Tiefpassfilter erster Ordnung gefiltert. Auf die Problematik der Torsionsschwingungen und der Geberradfehler, die zu Schwingungen in unterschiedlichen Frequenzbereichen führen, geht dieser Stand der Technik nicht ein.

### Aufgabe der Erfindung

Der Erfindung liegt die Aufgabe zugrunde, bei einem Verfahren und einer Vorrichtung zur Adaption von Toleranzen eines Geberrades zwischen den verschiedenen Ursachen der Toleranzen zu unterscheiden, wobei insbesondere zwischen betriebszustandabhängigen und nicht betriebszustandabhängigen Toleranzen unterschieden wird.

Diese Aufgabe wird durch die in den unabhängigen Ansprüchen gekennzeichneten Merkmale gelöst.

### Vorteile der Erfindung

Mit der erfindungsgemäßen Vorgehensweise können unterschiedliche Toleranzen, die betriebszustandabhängig und die nicht betriebszustandabhängig sind, in allen Betriebszuständen korrigiert werden.

Vorteilhafte und zweckmäßige Ausgestaltungen und Weiterbildungen der Erfindung sind in den Unteransprüchen gekennzeichnet.

Die Erfindung wird nachstehend anhand der in der Zeichnung dargestellten Ausführungsformen erläutert. Ausführungsbeispiele der Erfindung sind in der nachfolgenden Beschreibung anhand der zugehörigen Zeichnungen näher erläutert. Es zeigen Figur 1 ein Blockdiagramm einer Steuerung einer Brennkraftmaschine, Figur 2 verschiedene Signale über Grad Kurbelwellenwinkel aufgetragen, Figur 3 ein Blockdiagramm der Steuerung, Figur 4 ein Blockdiagramm der Adaption der Toleranzen des Geberrades, Figur 5 eine detaillierte Darstellung der Adaption und Figur 6 ein Flußdiagramm zur Verdeutlichung der Funktionsweise der Adaption.

### Beschreibung der Ausführungsbeispiele

Im folgenden wird die Geberradadaption am Beispiel einer Steuerung einer Brennkraftmaschine, insbesondere einer Dieselbrennkraftmaschine mit vier Zylindern beschrieben. Die Erfindung ist aber weder auf die Zahl der Zylinder noch auf die Art der Brennkraftmaschine beschränkt.

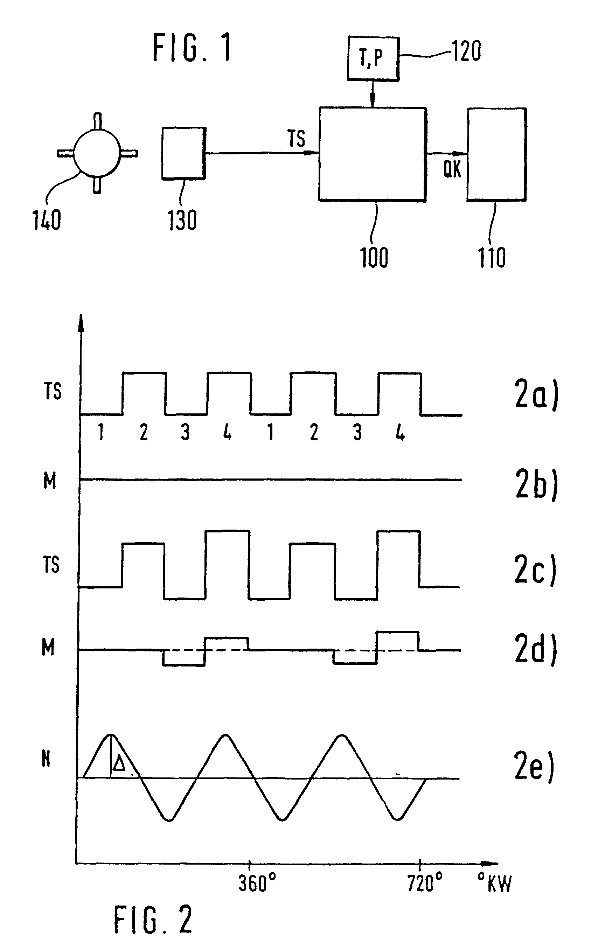

In Figur 1 ist eine solche Steuerung einer Brennkraftmaschine als Blockdiagramm grob schematisch dargestellt. Mit 100 ist die eigentliche Steuerung beaufschlagt. Diese beaufschlagt verschiedene Steller 110 mit Ansteuersignalen, die beispielsweise die eingespritzte Kraftstoffmenge QK beeinflussen, die der Brennkraftmaschine zugemessen wird. Die Steuerung verarbeitet verschiedene Ausgangssignale verschiedener Sensoren 120, die beispielsweise Temperaturwerte T, Druckwerte P sowie andere Betriebskenngrößen erfassen.

Ferner verarbeitet die Steuerung 100 ein Ausgangssignal eines Aufnehmers 130, der ein Geberrad 140 abtastet. Das Geberrad weist eine Anzahl von Markierungen auf, deren Abstände näherungsweise gleich sind.

Bei dem dargestellten Ausführungsbeispiel ist das Geberrad auf der Kurbelwelle angeordnet und weist vier Markierungen auf. Das Geberrad kann aber auch auf der Nockenwelle der Brennkraftmaschine angeordnet sein.

Der Abstand zwischen zwei Markierungen wird als Segment und dessen Dauer als Segmentzeit TS bezeichnet. Sind auf der Kurbelwelle 4 Markierungen angeordnet, so bedeutet dies, daß der Abstand zwischen zwei Einspritzungen in zwei Segmente aufgeteilt ist. Ein solches Geberrad wird üblicherweise als Segmentrad bezeichnet.

Das Geberrad kann auch als Inkrementrad ausgebildet sein. In diesem Fall sind eine Vielzahl von Markierungen vorgesehen. Die Zahl der Markierungen ist größer als die Zahl der Zylinder der Brennkraftmaschine. Dabei ist in der Regel vorgesehen, daß die Markierungen eine Lücke aufweisen, das heißt, daß eine Markierung fehlt. Häufig werden Geberräder mit 60-2 Markierungen verwendet.

Der Aufnehmer tastet die Markierungen ab und liefert vorzugsweise ein Signal TS als Meßwert, das der Segmentzeit entspricht.

In der Figur 2 sind verschiedene Signale über der Zeit aufgetragen. In Teilfigur 2a sind die Segmentzeiten TS eines toleranzfreien idealen Geberrades aufgezeichnet. Da jeweils ein Segment im wesentlichen vor und ein Segment im wesentlichen nach der Einspritzung liegt, nehmen die Segmentzeiten abwechselnd unterschiedliche Werte an.

In Figur 2b ist der Mittelwert M über alle Segmentzeiten aufgetragen. Der Mittelwert wird vorzugsweise über mehrere Segmente, das heißt Meßwerte gebildet. Vorzugsweise erfolgt die Mittelung über ein Arbeitsspiel, das heißt über den dargestellten Winkelbereich von 720 Grad Kurbelwellenwinkel. Bei einem idealen Geberrad ohne Toleranzen treten keine Abweichungen der einzelnen Segmentzeiten vom Mittelwert auf.

In Figur 2c sind die Segmentzeiten eines Geberrades aufgezeigt, bei dem aufgrund von mechanischen Toleranzen die Markierungen nicht exakt den gleichen Abstand aufweisen. Dies führt in dem dargestellten Beispiel dazu, daß die Segmentzeit des Segmentes 3 zu klein und die Segmentzeit des Segmentes 4 größer als der normale Wert ist

In Figur 2d ist wieder der Mittelwert M mit einer gestrichelt durchgezogenen Linie und die Abweichung der einzelnen Segmentzeiten von dem Mittelwert mit einer durchgezogenen Linie aufgezeigt. Es zeigt sich, daß bei dem Segment 3 und dem Segment 4 jeweils eine Abweichung der Segmentzeit vom Mittelwert vorliegt. Abweichungen dieser Art führen zu Schwingungen im Drehzahlsignal mit einem ganzzahligen Vielfachen der Kurbelwellenfrequenz.

In Figur 2e ist ein Beispiels für Drehzahlschwingungen aufgetragen, die auf Torsionsschwingungen der Kurbelwelle zurückzuführen sind. Erfindungsgemäß wurde erkannt, daß diese Schwingungen mit einer Frequenz auftreten, die ein halbzahliges Vielfaches der Frequenz der Kurbelwelle betragen.

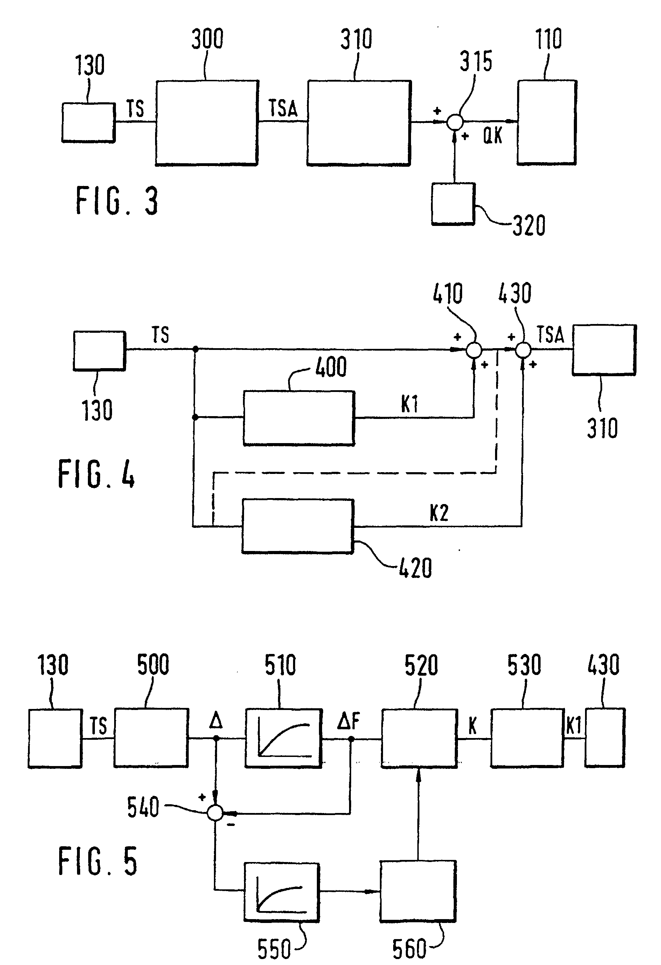

Es ist nun vorgesehen, daß diese Toleranzen des Geberrades, die zu Drehzahlschwingungen führen, mittels einer Adaption kompensiert werden. Hierzu wird die in Figur 3 dargestellte Einrichtung verwendet. Bereits in Figur 1 dargestellte Blöcke sind mit entsprechenden Bezugszeichen bezeichnet.

Das Ausgangssignal TS des Aufnehmers gelangt zu einer Adaption 300, die diese Werte korrigiert und als Größe TSA weiterleitet. Die korrigierten Segmentzeiten TSA werden in dem dargestellten Ausführungsbeispiel von einer Laufruheregelung 310 verarbeitet. Eine solche Laufruheregelung ist beispielsweise aus der DE-OS 195 27 218 bekannt. Das Ausgangssignal der Laufruheregelung 310 wird vorzugsweise in einem Additionspunkt 315 mit dem Ausgangssignal einer Mengensteuerung 320 verknüpft. Das so gebildete Mengensignal QK wird dann dem Steller 110 zugeleitet. Bei dem Mengensignal QK kann es sich beispielsweise um die Ansteuerdauer eines Magnetventils handeln.

Der Aufnehmer 130 tastet die Markierungen auf dem Geberrad 140 ab. Die so gebildeten Signale können in dem Aufnehmer 130 gefiltert werden, um beispielsweise Störimpulse auszufiltern. Ist das Geberrad als Inkrementrad ausgebildet und weist eine Vielzahl von Markierungen auf, so bildet der Aufnehmer ausgehend von dieser Vielzahl von Markierungen Meßwerte, das dem Ausgangssignal eines Segmentrades entspricht. Die Ausgangssignale des Aufnehmers 130 werden im Folgenden als Meßwerte oder als Segmentzeiten TS bezeichnet.

Das Ausgangssignal des Aufnehmers 130 gelangt dann zur Adaption, wo die Toleranzen aufgrund von mechanischen Toleranzen der Abstände der Markierungen und der Torsionsschwingungen mittels Korrekturfaktoren kompensiert werden.

Die so korrigierten Segmentzeiten TSA werden dann in der Steuerung weiterverarbeitet. Beispielsweise kann vorgesehen sein, daß diese korrigierten Segmentzeiten TSA von der Laufruheregelung 310 verarbeitet werden. Anstelle der Laufruheregelung 310 können aber auch andere Funktionsblöcke vorgesehen sein, die ein Drehzahlsignal verarbeiten. So kann auch vorgesehen sein, daß die Segmentzeiten einer Aussetzererkennung zugeführt werden.

In der Figur 4 ist die Adaption 300 detaillierter dargestellt. Das Ausgangssignal TS des Aufnehmers 130 gelangt zu einem ersten Adaptionsblock 400, der ein ersten Korrekturwert K1 zu einem Verknüpfungspunkt 410 leitet. Desweiteren gelangt das Ausgangssignal TS des Aufnehmers 130 zu einem zweiten Adaptionsblock 420, der einen zweiten Korrekturwert K2 zu einen Additionspunkt 430 leitet. Desweiteren gelangt das Ausgangssignal TS des Aufnehmers 130 unmittelbar zum zweiten Eingang des Additionspunktes 410.

Der Additionspunkt 410 verknüpft das Signal TS und den ersten Korrekturwert K1 vorzugsweise additiv. Das Ausgangssignal des Verknüpfungspunktes 410 gelangt zum ersten Eingang des Verknüpfungspunktes 430, der dieses Signal vorzugsweise additiv mit dem zweiten Korrekturwert K2 verknüpft. Am Ausgang des Verknüpfungspunktes 403 liegt die korrigierte Segmentzeit TSA an, die dann beispielsweise von der Laufruheregelung 310 weiterverarbeitet wird.

Der erste Adaptionsblock 400 bestimmt einen ersten Korrekturwert K1, der insbesondere mechanische Geberradfehler kompensiert. Zur Unterscheidung zwischen Toleranzen, die auf Geberradfehlern oder auf anderen Ursachen wie beispielsweise Torsionsschwingungen beruhen, erfolgt eine Filterung des Ausgangssignals des Aufnehmers 130.

Ein erstes Filter ist derart ausgebildet, daß er Schwingungen, die die Kurbelwellenfrequenz oder ganzzahlige Vielfache der Kurbelwellemfrequenz aufweisen, selektiert und diese zur Adaption bereitstellt. Das erste Filter unterzieht die Meßwerte einer ersten frequenzselektiven Filterung. Ausgehend von diesem gefilterten Signal, das dem in Figur 2c dargestellten Signal in etwa entspricht, werden die Abweichungen der einzelnen Segmentzeiten von dem Mittelwert M bestimmt und als erster Korrekturwert für die einzelnen Segmente abgespeichert. Dieser erste Korrekturwert K1, der die Abweichung der einzelnen Segmentzeiten vom Mittelwert aufgrund von Geberradfehlern berücksichtigt, wird dann mit dem Ausgangssignal TS des Aufnehmers 130 hinzuaddiert. Das so gebildete Signal entspricht dann dem in Figur 2a dargestellten Verlauf, wenn keine Torsionsschwingungen vorliegen würden.

Im zweiten Adaptionsblock 420 wird der zweite Korrekturwert K2 bestimmt, der Abweichungen des Signals TS vom Mittelwert kompensiert, die durch Torsionsschwingungen verursacht sind. Hierzu werden die Meßwerte des Aufnehmers 130 einer zweiten frequenzselektiven Filterung unterzogen. Die zweite Filterung ist so ausgestaltet, daß sie Schwingungen mit halbzahligen Vielfachen der Frequenz der Kurbelwelle selektiert. Ausgehend von diesem so gefilterten Signal wird dann der Korrekturwert K2 bestimmt. Dieser zweite Korrekturwert K2 wird dann im Verknüpfungspunkt 430 zu dem Meßwert der einzelnen Segmentzeiten hinzuaddiert.

In Figur 5 ist der zweite Adaptionsblock 420 detaillierter dargestellt. Das Ausgangssignal TS des Aufnehmers gelangt zu einem Filter und Referenzmodell 500. Dessen Ausgangssignal Δ gelangt über einen ersten Tiefpaß 510 als gefiltertes Signal ΔF zu einer Lernstrategie 520, an deren Ausgang ein Grundkorrekturwert K anliegt. Dieser Grundkorrekturwert gelangt zu einer Gewichtung 530, die ausgehend von diesem Grundkorrekturwert und einem betriebskenngrößenabhängigen Faktor F den ersten Korrekturwert K1 berechnet und dem Additionspunkt 430 zur Verfügung stellt.

Desweiteren gelangt das Ausgangssignal Δ des Filters und Referenzmodells 500 mit positiven Vorzeichen zu einem Verknüpfungspunkt 540 und das Ausgangssignal ΔF des ersten Tiefpaßfilters mit negativen Vorzeichen zu einem Verknüpfungspunkt 540. Das Ausgangssignal dieses Verknüpfungspunktes 540 gelangt zu einem zweiten Tiefpaß 550, der eine Bewertung 560 beaufschlagt. Diese Bewertung 560 beeinflußt die Lernstrategie 520.

Der erste Adaptionsblock 400 und der zweite Adaptionsblock 420 unterscheiden sich im wesentlichen lediglich in der Filterung 500 und der Gewichtung 530. Bei der Filterung 500 werden Filter, die unterschiedliche Frequenzen selektieren, verwendet. Beim ersten Adaptionsblock 400 erfolgt die Wichtung 530 mit einem konstanten Faktor. Beim zweiten Adaptionsblock 420 erfolgt eine betriebskenngrößenabhängige Wichtung.

Eine besonders vorteilhafte Ausgestaltung der erfindungsgemäßen Vorgehensweise ist in Figur 4 gestrichelt eingezeichnet. Bei dieser Ausführungsform wird dem zweiten Adaptionsblock 420, der die Torsionsschwingungen korrigiert, nicht das Ausgangssignal TS des Aufnehmers 130, sondern das Ausgangssignal des Verknüpfungspunktes 410 zugeführt. Dies bedeutet es erfolgt zuerst die Korrektur der Toleranzen des Geberrades. Das so korrigierte Signal wird dann im zweiten Adaptionsblock 420 zur Ermittlung der Korrekturwerte K2 zur Kompensation der Torsionsschwingungen verwendet.

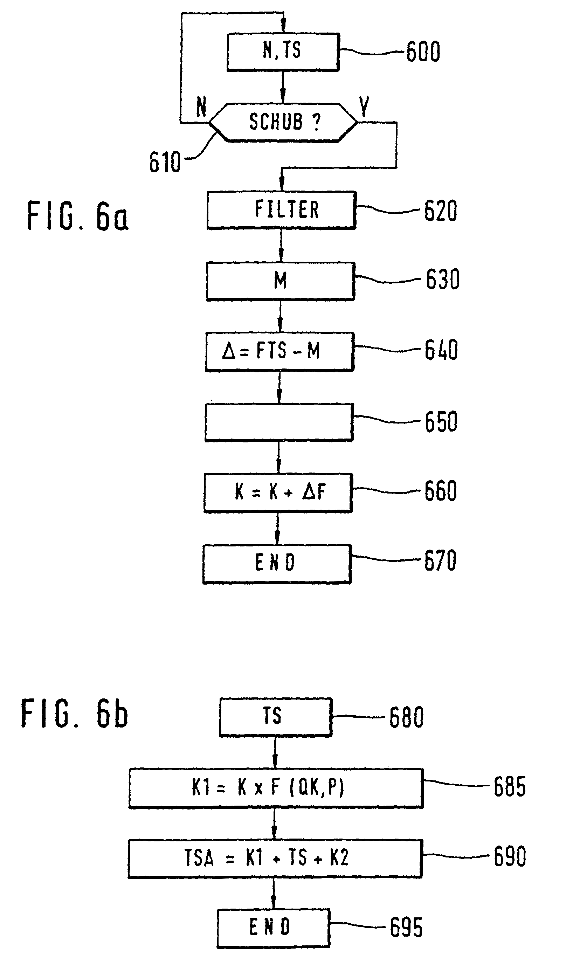

Die Funktionsweise des zweiten Adaptionsblockes 420 wird im folgenden anhand der Flußdiagramme der Figur 6 beschrieben. In Schritt 600 erfolgt die Erfassung der Meßwerte durch den Meßwertaufnehmer 130. Die Abfrage 610 überprüft, ob ein bevorzugter Betriebszustand vorliegt, in dem eine Adaption möglich und/oder sinnvoll ist. Als bevorzugter Betriebszustand wird vorzugsweise der Schubbetrieb gewählt. Es können aber auch andere Betriebszustände vorgesehen sein, in denen die Adaption durchgeführt wird.

Im anschließenden Schritt 620 erfolgt die frequenzselektive Filterung der Meßwerte. Im ersten Adaptionsblock 400 werden mittels einer ersten frequenzselektiven Filterung die Frequenzanteile mit ganzzahligen Vielfachen der Kurbelwellenfrequenz herausgefiltet. Mittels dieser Filterung werden die Frequenzanteile herausgefiltert, die im wesentlichen auf Einflüsse von Toleranzen bei der Fertigung zurückgehen und die im wesentlichen nicht betriebszustandsabhängig sind.

Im zweiten Adaptionsblock 420 werden mittels einer zweiten frequenzselektiven Filterung die Frequenzanteile mit halbzahligen Vielfachen der Kurbelwellenfrequenz herausgefiltet. Mittels dieser Filterung werden die Frequenzanteile herausgefiltert, die im wesentlichen auf Einflüsse von Torsionsschwingungen zurückgehen und die im wesentlichen betriebszustandsabhängig sind.

Mittels der frequenzselektiven Filterung werden die verschiedenen Einflüße auf die Meßwerte des Aufnahemers 130 selektiert. In dem jeweiligen Adaptionsblock werden dann Korrekturwerte zur Korrektur der verschiedenen Einflüße bestimmt.

Ist das Geberrad auf einer anderen Welle angeordnet, so werden die Frequenzen auf die Frequenz der Welle bezogen, auf der das Geberrad angeordnet ist.

Im Schritt 630 wird ein Referenzwert berechnet. Als Referenzwert wird vorzugsweise ein Mittelwert über mehrere Meßwerte verwendet. Vorzugsweise wird in dem dargestellten Ausführungsbeispiel über vier Segmente, das heißt über 360 Grad Kurbelwellenwinkel bzw. über ein komplettes Arbeitsspiel also 720 Grad Kurbelwellenwinkel gemittelt.

Im anschließenden Schritt 640 wird der Fehlerwert Δ, das heißt die Differenz zwischen dem gefilterten Meßwert FTS und dem Referenzwert M gebildet. Dieser Wert ist in Figur 2e dargestellt. Dieser Wert ist ein Maß für den Fehler, der durch die Torsionsschwingungen bzw. durch andere Effekte, die zu ähnlichen Fehlern führen, zurückzuführen ist.

In Schritt 650 erfolgt in der Bewertung 560 eine Beurteilung des Lernfortschritts. Hierzu wird das Ausgangssignal des ersten Tiefpaßfilters 510 ΔF mit dem Eingangssignal Δ des ersten Tiefpaßfilters 510 verglichen, im zweiten Tiefpaßfilter 550 gefiltert und ausgehend von diesem Signal die Lernstrategie 520 beeinflußt. Mit dieser Maßnahme soll verhindert werden, daß kurzzeitige Störungen der Meßwerte zu einer Änderung des Korrekturwerts K oder K1 führen. Dies bedeutet, kurzfristige Änderungen der Meßwert, die mittels der Tiefpaßfilterung erkannt werden, werden nicht berücksichtigt. Diese Bewertung und Lernstrategie entspricht im wesentlichen dem im Stand der Technik beschriebenen Vorgehensweise.

Anschließend im Schritt 660 wird der Grundkorrekturwert K ausgehend von dem Wert ΔF bestimmt. In der einfachsten Ausführungsform wird zu dem gespeicherten Grundkorrekturwert der neu ermittelte Fehlerwert ΔF hinzuaddiert. Bei besonders vorteilhaften Ausgestaltungen kann auch vorgesehen sein, daß der Korrekturwert K ausgehend von dem Mittelwert über mehrere Fehlerwerte ΔF gebildet wird.

Im anschließenden Schritt 670 endet die Ermittlung des Grundkorrekturwerts, die vorzugsweise in bevorzugten Betriebszuständen durchgeführt wird. Im normalen Betrieb, das heißt innerhalb und außerhalb dieser bevorzugten Betriebszustände werden die gespeicherten Korrekturwerte zur Korrektur der Meßwerte TS verwendet. Dies ist in Figur 6b dargestellt. Im Schritt 680 werden die Meßwerte TS von dem Aufnehmer 130 erfaßt gegebenenfalls gefiltert und weitergegeben.

Im Schritt 685 erfolgt die Berechnung des ersten Korrekturwerts K1 in der Gewichtung 530. Hierzu wird der Grundkorrekturwert K mit einem Faktor F multipliziert, der wiederum abhängig von verschiedenen Betriebszuständen vorgebbar ist.

Besonders vorteilhaft ist es, wenn der Faktor F abhängig von der einzuspritzenden Kraftstoffmenge QK oder einem, die einzuspritzende Kraftstoffmenge kennzeichnenden, Signal, wie beispielsweise der Einspritzdauer oder einem die Leistung der Brennkraftmaschine bestimmenden Signal vorgebbar ist. Desweiteren ist vorteilhaft, wenn weitere Betriebskenngrößen, wie beispielsweise der Ladedruck P oder andere Größen, berücksichtigt werden.

In Schritt 690 wird ausgehend von dem ersten Korrekturwert K1, dem zweiten Korrekturwert K2 und dem Meßwert T2 korrigierte Meßwert TSA bestimmt. Hierzu werden die drei Größen vorzugsweise addiert. Anschließend endet das Programm im Schritt 695.

Diese beschriebene Korrektur erfolgt für alle Segmentzeiten. In dem dargestellten Ausführungsbeispiel einer Vierzylinderbrennkraftmaschine mit vier Markierungen werden die Korrekturwerte für die Segmente 1 bis 4 bestimmt, Erfindungsgemäß wird im Schubbetrieb ein Grundkorrekturwert ermittelt, der dann in allen anderen Betriebszuständen verwendet wird, wobei ausgehend von dem Grundkorrekturwert und einem betriebskenngrößenabhängigen Faktor die Korrekturwerte für die einzelnen Betriebszustände bestimmt werden.

Dabei wird davon ausgegangen, daß im·Schubbetrieb kein Kraftstoff eingespritzt wird, daher sind alle Schwingungen auf Toleranzen bedingt durch Geberradfehler, Torsionsschwingungen und andere Effekte zurückzuführen. Effekte die auf eingespritzte Kraftstoffmengen zurückzuführen sind, die die Messung beeinträchtigen könnten, liegen nicht vor. Prinzipiell kann die Adaption auch durchgeführt werden, wenn Kraftstoff eingespritzt wird.

Bei der erfindungsgemäßen Vorgehensweise werden durch die frequenzselektive Filterung der Meßwerte die verschiedenen Einflüße auf das Drehzahlsignal, die auf verschiedene Ursachen zurückgehen, voneinander getrennt und können einzeln korrigiert werden. Dies ist besonders vorteilhaft, da Fehler, die auf der Anordnung der Markierungen beruhen, von Betriebszustand unabhängig sind und Fehler, die auf Torsionsschwingungen beruhen, vom Betriebszustand abhängig sind und damit betriebskenngrößenabhängig korrigierbar sind.

## Patentansprüche

1. Verfahren zur Korrektur von Toleranzen eines Geberrades (140), mit einer Anzahl von Markierungen, deren Abstände näherungsweise gleich sind und die von einem Aufnehmer (130) abgetastet werden, der eine Pulsfolge liefert, aus der Meßwerte gebildet werden, wobei ausgehend von einem Vergleich der einzelnen Meßwerte (T) mit einem Referenzwert Korrekturwerte (K1, K2) ermittelt werden, wobei wenigstens eine erste und eine zweite frequenzselektive Filterung (400, 420) der Meßwerte erfolgt, **dadurch gekennzeichnet, daß** eine erste Filterung (500, 400) Frequenzanteile selektiert, die auf Toleranzen beruhen, die nicht vom Betriebszustand abhängen, und/oder daß eine zweite Filterung (500, 420) Frequenzanteile selektiert, die auf Toleranzen beruhen, die vom Betriebszustand abhängen.

2. Verfahren nach Anspruch 1, **dadurch gekennzeichnet, daß** als Referenzwert (M) ein Mittelwert über mehrere Meßwerte verwendet wird.

3. Verfahren nach Anspruch 1 oder 2, **dadurch gekennzeichnet, daß** die erste Filterung (400) Frequenzanteile mit ganzzahligen Vielfachen der Frequenz einer Welle, auf der das Geberrad (140) angeordnet ist, selektiert und/oder daß eine zweite Filterung (420) Frequenzanteile mit halbzahligen Vielfachen der Frequenz einer Welle, auf der das Geberrad (140) angeordnet ist, selektiert.

4. Verfahren nach einem der vorhergehenden Ansprüche, **dadurch gekennzeichnet, daß** die Korrekturwerte (K1, K2) in bevorzugten Betriebszuständen, insbesondere im Schubbetrieb, ermittelt werden.

5. Verfahren nach Anspruch 4, **dadurch gekennzeichnet, daß** in den bevorzugten Betriebszuständen ein Grundkorrekturwert ermittelt wird.

6. Verfahren nach Anspruch 5, **dadurch gekennzeichnet, daß** ausgehend von dem Grundkorrekturwert und einem betriebskenngrößenabhängigen Faktor die Korrekturwerte bestimmt werden.

7. Verfahren nach Anspruch 6, **dadurch gekennzeichnet, daß** der Faktor wenigstens ausgehend von einer Größe, die die einzuspritzende Kraftstoffmenge kennzeichnet, vorgebbar ist.

8. Vorrichtung, welche Korrekturmittel (300) sowie erste und zweite frequenzselektive Filterung (500) der Messwerte aufweist, zur Korrektur von Toleranzen eines Geberrades (140), mit einer Anzahl von Markierungen, deren Abstände näherungsweise gleich sind und die von einem Aufnehmer (130) abgetastet werden, der eine Pulsfolge liefert, aus der Meßwerte (TS) gebildet werden, wobei die Korrekturmittel (300) ausgehend von einem Vergleich der einzelnen Meßwerte (TS) mit einem Referenzwert (M) Korrekturwerte (K1, K2) ermitteln, **dadurch gekennzeichnet, daß** die erste frequenzselektive Filterung (500, 400) Frequenzanteile selektiert, die auf Toleranzen beruhen, die nicht vom Betriebszustand abhängen, und/oder daß die zweite frequenzselektive Filterung (500, 420) Frequenzanteile selektiert, die auf Toleranzen beruhen, die vom Betriebszustand abhängen.

## Claims

1. Method for correction of tolerances in a rotary encoder (140), having a number of markings whose intervals are approximately equal and which are scanned by a sensor (130) which supplies a pulse train from which measurement values are formed, with correction values (K1, K2) being determined on the basis of a comparison of the individual measurement values (T) with a reference value, and with at least one first and one second frequency-selective filtering process (400, 420) being carried out on the measurement values, **characterized in that** a first filtering process (500, 400) selects frequency components which relate to tolerances which do not depend on the operating state, and/or **in that** a second filtering process (500, 420) selects frequency components which relate to tolerances which do depend on the operating state.

2. Method according to Claim 1, **characterized in that** a mean value over a number of measurement values is used as the reference value (M).

3. Method according to Claim 1 or 2, **characterized in that** the first filtering process (400) selects frequency components at integer multiples of the frequency of a shaft on which the rotary encoder (140) is arranged, and/or **in that** a second filtering process (420) selects frequency components at half multiples of the frequency of a shaft on which the rotary encoder (140) is arranged.

4. Method according to one of the preceding claims, **characterized in that** the correction values (K1, K2) are determined in predetermined operating states, in particular during overrunning.

5. Method according to Claim 4, **characterized in that** a basic correction value is determined in the preferred operating states.

6. Method according to Claim 5, **characterized in that** the correction values are established on the basis of the basic correction value and a factor which is dependent on the operating characteristics.

7. Method according to Claim 6, **characterized in that** the factor can be predetermined at least on the basis of a variable which indicates the amount of fuel to be injected.

8. Apparatus, which has correction means (300) as well as first and second frequency-selective filtering (500) of the measurement values, for correction of tolerances for a rotary encoder (140), having a number of markings whose intervals are approximately equal and which are scanned by a sensor (130) which supplies a pulse train from which measurement values (TS) are formed, with the correction means (300) determining correction values (K1, K2) on the basis of a comparison of the individual measurement values (TS) with a reference value (M), **characterized in that** the first frequency-selective filtering process (500, 400) selects frequency components which relate to tolerances which do not depend on the operating state, and/or **in that** the second frequency-selective filtering process (500, 420) selects frequency components which relate to tolerances which do depend on the operating state.

## Revendications

1. Procédé de correction des tolérances d'une roue phonique (140) comportant un certain nombre de marquages sensiblement équidistants, détectés par un capteur (130) fournissant une suite d'impulsions à partir de laquelle on forme des valeurs de mesure, et
partant de la comparaison des différentes valeurs de mesure (T) à une valeur de référence on détermine des valeurs de correction (K1, K2),
on effectue au moins un premier et un second filtrage sélectif en fréquence (400, 420) des valeurs de mesure,
**caractérisé en ce qu'**
un premier filtrage (500, 400) sélectionne des composantes de fréquence qui reposent sur des tolérances ne dépendant pas de l'état de fonctionnement, et/ou
un second filtrage (500, 420) sélectionne les composantes de fréquence reposant sur des tolérances dépendant de l'état de fonctionnement.

2. Procédé selon la revendication 1,
**caractérisé en ce que**
comme valeur de référence (M) on utilise une valeur moyenne sur plusieurs valeurs de mesure.

3. Procédé selon l'une quelconque des revendications 1 ou 2,
**caractérisé en ce que**
le premier filtrage (400) sélectionne les composantes de fréquence correspondant à un multiple entier de la fréquence d'un arbre portant la roue phonique (140), et/ou
un second filtrage (420) sélectionne les composantes de fréquence correspondant à un multiple mi-entier de la fréquence de l'arbre portant la roue phonique (140).

4. Procédé selon l'une quelconque des revendications précédentes,
**caractérisé en ce qu'**
on détermine des valeurs de correction (K1, K2) dans des états de fonctionnement prédéterminés notamment en mode de poussée inertielle.

5. Procédé selon la revendication 4,
**caractérisé en ce qu'**
on détermine une valeur de correction de base dans les états de fonctionnement préférentiels.

6. Procédé selon la revendication 5,
**caractérisé en ce qu'**
on détermine les valeurs de correction à partir de la valeur de correction de base et d'un coefficient dépendant des caractéristiques de fonctionnement.

7. Procédé selon la revendication 6,
**caractérisé en ce qu'**
on prédétermine le coefficient à partir d'au moins une grandeur qui caractérise la quantité de carburant à injecter.

8. Dispositif comportant des moyens de correction (300) ainsi qu'un premier et un second moyen de filtrage (500) sélectif en fréquence pour les valeurs de mesure, pour corriger les tolérances d'une roue phonique (140), comportant un certain nombre de marquages sensiblement équidistants et détectés par un capteur (130) fournissant une suite d'impulsions à partir de laquelle on forme des valeurs de mesure (TS), et partant de la comparaison des différentes valeurs de mesure (TS) et d'une valeur de référence (M), les moyens de correction (300) fournissent des valeurs de correction (K1, K2),
**caractérisé en ce que**
le premier moyen de filtrage sélectif en fréquence (500, 400) sélectionne des composantes de fréquence reposant sur des tolérances ne dépendant pas de l'état de fonctionnement, et/ou le second filtrage sélectif en fréquence (500, 420) sélectionne des composantes de fréquence reposant sur des tolérances dépendant de l'état de fonctionnement.
